# EUROPÄISCHE PATENTSCHRIFT

(11) **EP 2 769 619 B1**
(45) Veröffentlichungstag und Bekanntmachung des Hinweises auf die Patenterteilung: **05.07.2017**
(21) Anmeldenummer: 14155705.8
(22) Anmeldetag: 19.02.2014
(51) Int. Cl.: A01N 25/02, A01N 59/00, A01N 59/08, A01N 59/02, C02F 1/461

(54) **Verwendung von Oxidationsmittel enthaltendem Elektrolysewasser und Verfahren zum Verhindern bzw. Behindern sowie zur Reduktion von Sporenkeimung und Myzelwachstum von Pilzen der Gattungen Botrytis und Fusarium**
Use of oxidising agents containing electrolysis water and method for avoiding, preventing or reducing spore germination and mycelium growth of fungi of the species botrytis and fusarium
Utilisation d'eau d'électrolyse contenant un agent d'oxydation et procédé destiné à empêcher ou entraver et à réduire la germination de spores et la croissance micellaire de champignons des espèces Botrytis et Fusarium

(30) Priorität: 21.02.2013 AT 501152013
(43) Veröffentlichungstag der Anmeldung: 27.08.2014
(73) Patentinhaber: pro aqua Diamantelektroden Produktion GmbH & Co KG, 8712 Niklasdorf (AT)
(72) Erfinder: Schelch, Michael, 8600 Oberaich (AT); Staber, Wolfgang, 8600 Bruck an der Mur (AT); Hermann, Robert, 8600 Oberaich (AT); Wesner, Wolfgang, 1220 Wien (AT)
(74) Vertreter: Vinazzer, Edith

(56) Entgegenhaltungen:
- DE-A1-102007 017 502
- JP-A- 2011 073 988
- US-A1- 2005 139 808
- KRIS AUDENAERT ET AL: "Neutralized electrolyzed water efficiently reduces Fusarium spp. in vitro and on wheat kernels but can trigger deoxynivalenol (DON) biosynthesis", FOOD CONTROL, Bd. 23, Nr. 2, 1. Februar 2012 (2012-02-01), Seiten 515-521, XP055113438, ISSN: 0956-7135, DOI: 10.1016/j.foodcont.2011.08.024
- JANE L. GUENTZEL ET AL: "Evaluation of electrolyzed oxidizing water for phytotoxic effects and pre-harvest management of gray mold disease on strawberry plants", CROP PROTECTION, Bd. 30, Nr. 10, 1. Oktober 2011 (2011-10-01), Seiten 1274-1279, XP055113441, ISSN: 0261-2194, DOI: 10.1016/j.cropro.2011.05.021 & GUENTZEL J L ET AL: "Postharvest management of gray mold and brown rot on surfaces of peaches and grapes using electrolyzed oxidizing water", INTERNATIONAL JOURNAL OF FOOD MICROBIOLOGY, ELSEVIER BV, NL, Bd. 143, Nr. 1-2, 30. September 2010 (2010-09-30), Seiten 54-60, XP027248369, ISSN: 0168-1605 [gefunden am 2010-07-27]
- RICO ET AL: "Extending and measuring the quality of fresh-cut fruit and vegetables: a review", TRENDS IN FOOD SCIENCE AND TECHNOLOGY, ELSEVIER SCIENCE PUBLISHERS, GB, Bd. 18, Nr. 7, 11. Juni 2007 (2007-06-11), Seiten 373-386, XP022112799, ISSN: 0924-2244, DOI: 10.1016/J.TIFS.2007.03.011

## Beschreibung

Die Erfindung betrifft die Verwendung von Oxidationsmittel enthaltendem Elektrolysewasser und ein Verfahren zum Verhindern bzw. Behindern sowie zur Reduktion von Sporenkeimung und Myzelwachstum von Pilzen der Gattungen Botrytis und Fusarium.

Es ist bekannt, dass Elektrolysewasser eine reinigende und desinfizierende Wirkung aufweist. Gemäß dem Stand der Technik wird Elektrolysewasser aus einer Salzlösung, zumeist einer Natriumchlorid-Lösung, in einer Elektrolysezelle erzeugt, in welcher Anode und Kathode aus konventionellen Materialien und durch eine nicht selektive Membran voneinander getrennt vorliegen. Durch Elektrolyse der NaCl-Moleküle wird in der Anodenkammer Elektrolysewasser mit niedrigem pH und hohem Redoxpotential und in der Kathodenkammer Elektrolysewasser mit höherem pH und niedrigerem Redoxpotential erzeugt. Durch die Desinfektionswirkung von Chlor und Sauerstoff, die bei der Elektrolyse abgespalten werden, wird eine Keimabtötung erzielt. Eine Anzahl von publizierten Studien befasst sich mit der Verwendung von Elektrolysewasser zur Behandlung von pflanzenpathogenen Pilzen, wobei sich die publizierten Studien auf Elektrolysewasser mit einem sauren pH-Wert oder auf neutrales Elektrolysewasser beziehen. Eine dieser Publikationen ist die Publikation Kris Audenaert et al: "Neutralized electrolyzed water efficiently reduces Fusarium supp. in vitro and on wheat kernels but can trigger deoxynivalenol (DON) biosynthesis", FOOD CONTROL, 1.Februar 2012, Seiten 515 - 521, XP055113438, ISSN: 0956-7135, DOI: 10.1016/j.foodcont.2011.08.024. Die Publikation Guentzel JL, Lam KL, Callan MA, Emmons SA, Dunham VL (2010): Postharvest management of gray mold and brown rot on surfaces of peaches and grapes using electrolyzed oxidizing water, International Journal of Food Microbiology 143, 54-60 befasst sich beispielsweise mit der Verwendung von nahezu neutralem, einen pH von 6,3 bis 6,5 aufweisendem Elektrolysewasser zur Inaktivierung von Botrytis cinerea auf der Oberfläche von Früchten. Die Publikation Buck JW, Iersel MW, Oetting RD, Hung YC (2002): In vitro fungicidal activity of acidic electrolyzed oxidizing water, Plant Disease 86, 278-281 befasst sich mit der Verwendung von saurem Elektrolysewasser zur Eliminierung von Botrytis cinerea.

Aus der WO 2008/101364 A2 ist ein Pflanzenschutzverfahren zur Kontrolle von Pflanzenschädlingen mittels elektrolytisch hergestellten oxidativen Radikalen, UV-C Licht und luftunterstützer elektrostatischer Sprühtechnologie bekannt. Die Herstellung von bioziden oxidativen Radikalen erfolgt in wässrigen, salzhaltigen Lösungen mittels Elektrolyse, wobei bei einem der hier beschriebenen Elektrolyseverfahren eine spezielle Elektrolysezelle mit diamantbeschichtete Elektroden verwendet wird, wobei ein Cocktail aus oxidativen Radikalen nahe dem neutralen Bereich mit einem pH von 6,4 bis 6,8 entsteht.

Die den Gegenstand diverser Studien bildenden sowie die aus der Patentliteratur bekannten Verfahren sind offensichtlich bisher nicht dazu geeignet gewesen, im Pflanzenschutz vorbeugend gegen und zur Bekämpfung von Befall durch pflanzenpathogene Pilze wirksam und vor allem auch wirtschaftlich eingesetzt zu werden. Massgebend dafür dürfte sein, dass bei der herkömmlichen Elektrolyse in einer zweikammrigen Elektrolysezelle quasi die Hälfte des gebildeten Elektrolysewassers verworfen werden muss und dass das verwendete Elektrolysewasser nicht die erforderliche Wirksamkeit aufwies.

Pilze der Gattungen Botrytis und Fusarium gehören weltweit zu den bedeutsamsten Pflanzenschädlingen. Pilze der Gattung Fusarium sind beispielsweise Verursacher der Ährenfusariose an Getreide sowie der Stängelfäule an Mais. Die zur Gattung Botrytis gehörenden Pilze sind ebenfalls bedeutende Pflanzenschädlinge, die Fäule verursachen. Der von den Pilzen der Gattungen Botrytis und Fusarium verursachte wirtschaftliche Schaden ist enorm. Die Bekämpfung von Botrytis und Fusarium ist meist schwierig und aufwendig. Etwa im Weinbau ist eine Kombination von weinbautechnischen Maßnahmen, wie das Entblättern direkt nach der Blüte, mit dem Spritzen von Botrytiziden üblich. Ist Raps von Botrytis cinerea befallen, ist der Einsatz von Fungiziden nicht mehr wirksam. Die Fusarium-Bekämpfung mit Fungiziden im Getreide ist ein kaum gelöstes Problem, Teilerfolge lassen sich mit Wirkstoffen wie Prothioconacol und Tebuanazol erzielen, wobei sichtbarer Befall nicht mehr bekämpft werden kann, sodass aufwändige vorbeugende Maßnahmen notwendig sind.

Der Erfindung liegt somit die Aufgabe zugrunde, ein Mittel zur wirksamen Vorbeugung, Unterdrückung bzw. Reduktion von Sporenkeimung und Myzelwachstum der pflanzenpathogenen Pilzgattungen Botrytis und Fusarium auf Pflanzen und Früchten zur Verfügung zu stellen, wobei dieses Mittel einen wirtschaftlichen Einsatz auf breiter Basis ermöglichen und seine Anwendung für den Menschen gesundheitlich unbedenklich sein soll.

Gelöst wird die gestellte Aufgabe erfindungsgemäß durch die Verwendung von Oxidationsmittel enthaltendem Elektrolysewasser mit neutralem bis basischem pH, welches in einer einkammrigen Elektrolysezelle, die zumindest eine Diamantelektrode aufweist, aus einer wässrigen Salzlösung hergestellt ist, als Mittel zum Verhindern bzw. Behindern bzw. Reduzieren von Sporenkeimung und Myzelwachstum von Pilzen der Gattungen Botrytis oder Fusarium auf Pflanzen oder Früchten durch Aufbringen des Elektrolysewassers auf die Pflanzen oder Früchte.

Das erfindungsgemäße Verfahren ist gekennzeichnet durch
das Herstellen von Oxidationsmittel enthaltendem Elektrolysewasser mit einem neutralen bis basischen pH aus einer wässrigen Salzlösung in einer einkammrigen Elektrolysezelle, die als Elektrode zumindest eine Diamantelektrode enthält,
und das Aufbringen des Elektrolysewassers auf die Pflanzen oder Früchte.

Gemäß der Erfindung kommt Elektrolysewasser zum Einsatz, welches einen pH-Wert im basischen Bereich aufweist und ein sehr breiteres Spektrum an Oxidationsmitteln enthält. Bei der Elektrolyse der wässrigen Salzlösung in einer einkammrigen Elektrolysezelle erhöht sich, durch den Verbrauch an Chloriden bei der anodischen Chlorproduktion, der pH - Wert der Lösung. Dadurch, dass keine Trennung von Anoden- und Kathodenraum vorgesehen ist erfolgt unmittelbar eine Durchmischung und Neutralisierung von sauren Anolyten mit alkalischen Katholyten, so dass erfindungsgemäß ein neutrales bis basisches und gleichzeitig verschiedene Oxidationsmittel enthaltendes Elektrolysewasser hergestellt wird. Ein Grund für die überraschend gute Wirksamkeit des erfindungsgemäßen, insbesondere basischen Elektrolysewassers im Vergleich zu saurem Elektrolysewasser dürfte in einer Interaktion der basischen Bestandteile der Lösung mit der Sporenwand der Pilzsporen sein. Sporen, welche sich gerade in einer physiologisch inaktiven Phase befinden, weisen auf Grund ihrer hydrophoben Sporenwand einen gewissen Schutz vor Oxidationsmittelangriffen auf, so dass mit einfachen Oxidationsmitteln eher Myzel und gerade keimende Sporen geschädigt werden können. Durch die alkalische Lösung wird jedoch die Sporenwand hydrophiler und durchlässiger, was den Oxidationsmitteln im Elektrolysewasser auch ein Eindringen in physiologisch gerade nicht aktive Sporen ermöglicht.

Grundsätzlich ist es aus dem Stand der Technik bekannt, dass durch Elektrolyse bei niedrigen pH Werten größere Mengen an Oxidationsmitteln hergestellt werden können. Dies ist darin begründet, dass bei niedrigen pH Werten eine niedrige Konzentration an OH-Ionen im Wasser verfügbar ist, wodurch die anodische Sauerstoffproduktion (= unerwünschte Konkurrenzreaktion) gegenüber der Oxidationsmittelproduktion (z.B. Chlorproduktion aus Chlorid) zurück gedrängt wird. Darum sind die nach dem Stand der Technik bekannten Elektrolysewässer praktisch alle sauer. Durch den Einsatz von Diamantelektroden mit einer hohen Überspannung gegenüber der Sauerstoffproduktion als Eigenschaft der Elektrode selbst, werden trotz höherer OH- Konzentrationen im Elektrolyten bzw. an der Anode, auch bei höheren pH Werten mit guter Ausbeute Oxidationsmittel mit hohem Potential produziert. Die Konkurrenzreaktion der Sauerstoffproduktion muss hier nicht über den pH Wert unterbunden werden. Daher können mit der erfindungsgemäßen Anordnung erstmals die besser wirksamen, alkalischen Oxidationsmittel mit gutem Wirkungsgrad direkt hergestellt und angewandt werden.

Die Verwendung des Elektrolysewassers birgt ein enormes Potential, da die Arten der Gattungen Botrytis und Fusarium im Garten-, Feld- und Obstbau jährlich gravierende wirtschaftliche Schäden verursachen. Das Elektrolysewasser kann den Einsatz von synthetischen Fungiziden in einer Zeit, in der immer mehr die Umweltverträglichkeit und Nachhaltigkeit von Produkten im Vordergrund steht, verhindern. Das Elektrolysewasser zeigt eine hohe Wirksamkeit gegen Pilze der Gattungen Botrytis und Fusarium, aber kaum toxische Wirkungen auf die Pflanzen selbst und auf die Umwelt. Einer der Hauptvorteile des Elektrolysewassers besteht somit auch in seiner Sicherheit, kommt es mit organischem Material in Kontakt, wird es wieder zu gewöhnlichem Wasser.

Gemäß der Erfindung eignet sich das Elektrolysewasser einerseits zur prophylaktischen Behandlung von Pflanzen, Pflanzenteilen und Früchten und andererseits von bereits von Botrytis oder Fusarium befallen Pflanzen, Pflanzenteilen und Früchten. Eine besonders gute Wirkung zeigt Elektrolysewasser, welches einen pH zwischen 7,1 und 11,5, insbesondere zwischen 7,1 und 9,5, aufweist.

Elektrolysewasser mit einer otimalen Konzentration an Oxidationsmittel mit einem guten Wirkungsgrad lässt sich insbesondere in einer Elektrolysezelle herstellen, welche zumindest eine bipolare, insbesondere Bor-dotierte Diamantelektrode enthält. Zusätzlich oder alternativ kann die Elektrolysezelle vorteilhafterweise zumindest eine Kontaktierungselektrode enthalten, die eine Diamantelektrode, sei es eine herkömmlich ausgeführte Diamantelektrode oder auch eine Diamantpartikelelektrode, enthält.

Die Basislösung, aus der in der Elektrolysezelle das Elektrolysewasser entsteht, kann auf sehr einfache Weise hergestellt werden. Besonders geeignet ist als Basislösung eine wässrige NaCl-, KCl- oder MgCl₂-Lösung, wobei NaCl, KCl oder MgCl₂ auch in beliebiger Kombination miteinander zur Herstellung der Basislösung herangezogen werden können. Dabei werden insbesondere 2 g bis 8 g NaCl, KCl und/oder MgCl₂ in 1 L Wasser gelöst.

Besonders wirkungsvoll und vorteilhaft ist die Verwendung des Elektrolysewassers auf Pflanzen, Pflanzenteilen oder Früchten zum Verhindern bzw. Behindern von Sporenkeimung sowie zur Vernichtung von bereits gebildetem Myzel der Pilzarten Botyrtis cinerea und Fusarium culmorum. Gerade diese beiden Pilzarten verursachen weltweit enorme wirtschaftliche Schäden an Nutzpflanzen und an Früchten.

Zur Anwendung des Elektrolysewassers kann dieses auf die betreffenden Pflanzen, auf Teile von Pflanzen oder auf Früchte gesprüht werden oder es können die Pflanzen, Pflanzenteile und Früchte auch mit dem Elektrolysewasser gewaschen werden.

Die Behandlung der Pflanzen, Pflanzenteile und Früchte kann dann im angebauten Zustand, beispielsweise unmittelbar auf einem Feld, erfolgen.Möglich und sehr vorteilhaft ist jedoch auch die Behandlung der Pflanzen, Pflanzenteile und Früchte in bereits geerntetem Zustand, ferner vor und bei deren Transport und deren Lagerung sowie sogar im Verkaufslokal. Neben der erwiesenen Wirksamkeit des Elektrolysewassers ist bei diesen Anwendungen auch von großem Vorteil, dass sich die oxidativen Bestandteile des Elektrolysewassers nach relativ kurzer Zeit von selbst abbauen.

Weitere Merkmale, Vorteile und Einzelheiten der Erfindung werden nun anhand der Zeichnung näher erläutert. Dabei zeigen
Fig.1 eine schematische Skizze einer Ausführungsform einer Elektrolysezelle zur Erzeugung von Elektrolysewasser und
Fig. 2a, 2b und 3 bis Fig. 7 Diagramme, welche die Wirkung des Elektrolysewassers auf Vertreter der Pilzgattungen Botrytis und Fusarium zeigen.

Im Rahmen der Erfindung sind zur Erzeugung von Elektrolysewasser einkammrige Elektrolysezellen einsetzbar, welche zumindest eine Diamantelektrode enthalten. Unter den Begriff "Diamantelektrode" fallen alle nach bekannten Verfahren, beispielsweise dem CVD-Verfahren, hergestellten Diamantelektroden und ferner Diamantpartikelelektroden. Die Elektrolysezelle kann derart ausgeführt sein, dass zumindest eine der Kontaktierungselektroden, vorzugsweise die Anode, eine Diamantelektrode ist, und/oder dass zumindest eine bipolare Diamantelektrode zusätzlich zu den Kontaktierungselektroden eingebaut ist. Als bipolare Diamantelektrode eignet sich vor allem eine Diamantpartikelelektrode.

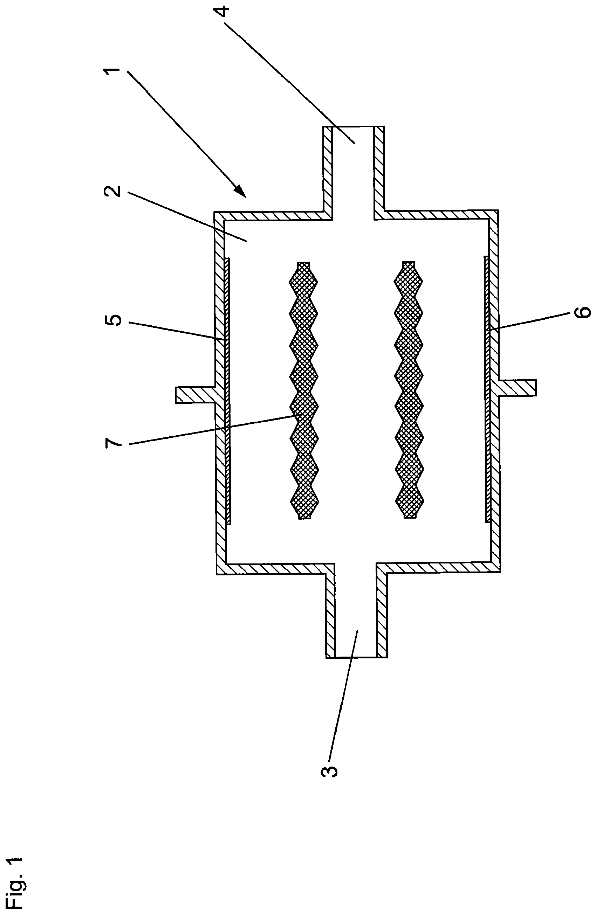

Fig. 1 zeigt eine Ausführungsform einer im Rahmen der Erfindung zur Herstellung von Elektrolysewasser einsetzbaren, als Durchflusszelle konzipierten Elektrolysezelle 1. Die Elektrolysezelle 1 weist eine von Wasser durchströmbare Kammer 2 auf, die zumindest eine Zuflussöffnung 3 und zumindest eine Abflussöffnung 4 besitzt. Die Elektrolysezelle 1 umfasst ferner in bekannter Weise zwei in der Kammer 2 wandseitig positionierte Kontaktierungselektroden, eine Kathode 5 und eine Anode 6. In der Kammer 2 ist in paralleler Anordnung zu den Kontaktierungselektroden 5, 6 zumindest eine bipolare Diamantpartikelelektrode 7 positioniert, wobei bei der dargestellten Ausführungsform in der Elektrolysezelle 1 zwei bipolare Diamantpartikelelektroden 7 enthalten sind. Jede bipolare Diamantpartikelelektrode 7 weist vorzugsweise mit Bor dotierte, synthetisch hergestellte Diamantpartikel auf, welche einlagig in eine Trägerschicht aus elektrisch isolierendem Material, beispielsweise Glas, Keramik oder einem Kunststoff, eingebettet sind, wobei die Diamantpartikel an beiden Seiten der Trägerschicht freigelegt sind. Derartige Diamantpartikelelektroden können beispielsweise gemäß dem im österreichischen Patent Nr. 503 402 beschriebenen Verfahren hergestellt sein.

Die beiden Kontaktierungselektroden 5, 6 können handelsübliche Elektroden, insbesondere aus Iridium/Ruthenium oder platinbeschichtetem Titanblech, Graphitelektroden oder herkömmliche, beispielsweise gemäß dem CVD-Verfahren hergestellte, Diamantelektroden sein. Zumindest eine der Kontaktierungselektroden 5, 6 kann auch eine Diamantpartikelelektrode sein, welche einseitig mit einer Kontaktierungsschicht versehen worden ist.

Zur Erzeugung des Elektrolysewassers wird der Elektrolysezelle 1 an der Zuflussöffnung 3 Wasser, in welchem NaCl, KCl oder MgCl₂ gelöst wurde, zugeführt. Zur Herstellung der Salzlösung werden zwischen 2 g und 8 g NaCl, KCl oder MgCl₂, auch in Kombination, in 1 L normalem Leitungswasser oder in 1 L vorbehandeltem, beispielsweise enthärtetem Wasser gelöst. Die Zugabemenge richtet sich nach der gewünschten Konzentration an oxidativen Radikalen bzw. Oxidationsmitteln im gebildeten Elektrolysewasser, wobei auch die Summe an Elektrodenflächen in der Elektrolysezelle 1 und der Ladungseintrag (Ah/L) die Konzentration beeinflussen. Diese Parameter werden derart aufeinander abgestimmt bzw. gewählt, dass im Elektrolysewasser insbesondere zwischen 50 mg/L und 200 mg/L Oxidationsmittel, gemessen als Summenparameter freies Chlor, enthalten sind. Das Elektrolysewasser wird aus der Salzlösung, die vorab bereitgestellt werden kann, je nach Bedarf und in situ gebildet. Diese Maßnahme erlaubt den Einsatz von Durchflusszellen zur Erzeugung von Elektrolysewasser unmittelbar und direkt vor Ort, beispielsweise durch Einbau einer oder mehrerer Elektrolysezelle(n) 1 in eine herkömmliche Sprühvorrichtung, welche als größere Sprühanlage oder als Handsprühgerät konzipiert sein kann. Die Sprühvorrichtung und ihre weiteren Komponenten sind nicht Gegenstand der Erfindung, daher nicht gesondert beschrieben und können nach dem Stand der Technik ausgeführt sein.

Das gebildete Elektrolysewasser, welches an der zumindest einen Abflussöffnung 4 die Elektrolysezelle 1 verlässt, wird in bekannter Weise durch die Sprühvorrichtung zu zumindest einer Sprühdüse gepumpt und auf die zu behandelnden Pflanzen aufgebracht. Das in einer Elektrolysezelle 1 gebildete Elektrolysewasser ist neutral bis basisch und weist insbesondere einen pH-Wert zwischen 7,1 und 11,5, vorzugsweise zwischen 7,1 und 9,5, auf. Dieser im Vergleich zu Elektrolysewasser, welches in herkömmlichen Elektrolysezellen erzeugt wird, höhere pH-Wert ist wie eingangs erläutert einer der Gründe, weswegen das Elektrolysewasser gemäß der Erfindung besonders gut die Sporenkeimung und die Myzelentwicklung pflanzenpathogener Pilze der Gattungen Botrytis und Fusarium hemmt. Für die Wirkung des Elektrolysewassers ist ferner das breite Spektrum an Oxidationsmitteln verantwortlich, wie freies Chlor, HOCl, OCl⁻-Ionen, H₂O₂ (Wasserstoffperoxid) und Ozon.

Das in einer einkammrigen Elektrolysezelle 1, welche zumindest eine Diamantelektrode enthält, hergestellte Elektrolysewasser ist besonders wirksam zum Verhindern und Behindern von Sporenkeimung und Vernichtung von Myzel aller pflanzenpathogene Pilze der Gattungen Fusarium und Botrytis. Fusarien gehören weltweit zu den wichtigsten Schadpilzen in Getreide und Mais sowie in anderen Kulturpflanzen. Das Elektrolysewasser kann gegen alle Fusarienarten eingesetzt werden, insbesondere Fusarium avenaceum, Fusarium chlamydosporum, Fusarium coeruleum, Fusarium dimerum, Fusarium incarnatum, Fusarium moniliforme, Fusarium napiforme, Fusarium oxysporum, Fusarium poae, Fusarium proliferatum, Fusarium sacchari, Fusarium solani, Fusarium sporotrichioides, Fusarium subglutinans, Fusarium tabacinum und Fusarium verticillioides sowie deren Hybriden. Der Pilz Fusarium culmorum gilt neben weiteren Fusarium-Arten als Verursacher der Ährenfusariose an Getreide sowie der Stängelfäule an Mais. Der Pilz verursacht weltweit enorme wirtschaftliche Schäden in Getreide- und Maisanbaugebieten. Ein wichtiger Aspekt des Qualitätsverlustes der Pflanzen durch Fusarium culmorum ist die Produktion von Toxinen, die das befallene Getreide für die menschliche und tierische Ernährung ungeeignet machen. Die zur Gattung Botrytis gehörenden Pilze sind ebenfalls bedeutende Pflanzenschädlinge, sie leben als Parasiten und bewirken Fäule. Den Menschen gefährdet Botrytis vor allem durch sein hohes allergenes Potential. Das Elektrolysewasser eignet sich zum Einsatz gegen Botrytis cinerea, Botrytis fabae, Botrytis calthae, Botrytis ranunculi, Botrytis ficariarum, Botrytis pelargonii, Botrytis paeoniae, Botrytis hyacinthi, Botrytis tulipae, Botrytis elliptica, Botrytis squamosa, Botrytis aclada, Botrytis x allii, Botrytis byssoidea, Botrytis globosa, Botrytis porri, Botrytis sphaerosperma, Botrytis narcissicola, Botrytis polyblastis, Botrytis galanthina, Botrytis convoluta, Botrytis croci und Botrytis gladiolorum sowie deren Hybriden. Der Pilz Botrytis cinerea ist der Erreger der Grauschimmelfäule und hat aufgrund der von ihm verursachten hohen Ertrags- und Qualitätsverluste sowie dem breiten Wirtspflanzenkreis eine große wirtschaftliche Bedeutung. Zahlreiche Wirtspflanzen, wie Erdbeeren, Weinrebe, Salate, Himbeeren, Tomaten, Raps, Kohl, Hopfen und dergleichen, können befallen werden.

Das Elektrolysewasser kann auf alle Bestandteile oder nur einzelne Bestandteile von Pflanzen und auf Früchte aufgebracht werden. Pflanzen, Pflanzenteile und Früchte können mit dem Elektrolysewasser besprüht oder gewaschen werden. Das Elektrolysewasser kann vorbeugend oder bei Befall, ferner einmalig oder in gewissen Abständen verwendet werden. Möglich ist auch die Behandlung von Pflanzen, Pflanzenteilen oder Früchten vor oder während dem Trasnport, der Lagerung oder prophylaktisch im Verkaufslokal.

Mit den zwei wirtschaftlich besonders relevanten Pilzarten Fusarium culmorum und Botrytis cinerea wurden Bioessays auf Basis der Sporenkeimung und Myzelentwicklung in Flüssigmedien im Labor etabliert und geprüft. Für die Versuche wurde Fusarium culmorum Isolat (IFA 301, zur Verfügung gestellt von M. Lemmens, IFA Tulln) sowie Botrytis cinerea, isoliert von einer befallenen Melanzani, verwendet. Für die Herstellung der Sporensuspensionen wurden die Pilze unter standardisierten Bedingungen für mehrere Wochen auf einem Nährboden kultiviert, unter sterilen Bedingungen mit autoklaviertem, destilliertem Wasser überschichtet und in weiterer Folge die gewünschte Sporenkonzentration mit Hilfe einer Thoma-Zählkammer exakt eingestellt.

Für die Herstellung des Elektrolysewassers wurden einerseits zwei NaCl-Lösungen, NaCl(1) und NaCl(2), und andererseits zwei Lösungen aus NaHCo₃, Na₂SO₄ und MgSO₄, NNM(1) und NNM(2), verwendet.

Für die NaCl-Lösungen NaCl(1) und NaCl(2) wurden 5 Gramm 99,9%-iges NaCl (C. Roth, Karlsruhe) in 1 L destilliertem Wasser gelöst und anschließend in einer Elektrolysezelle mit Iridium/Ruthenium Elektroden als Kontaktierungselektroden und mit drei Bor-dotierten, bipolaren Diamantpartikelelektroden (Firma pro aqua Diamantelektroden Produktion GmbH) behandelt, sodass die Konzentration an Oxidationsmittel im Elektrolysewasser ca. 300 mg/L betrug. Der pH-Wert beider Elektrolysewasser war 9,5.

Zu Vergleichszwecken wurde eine Natriumchlorid-Lösung hergestellt, die nicht in der Elektrolysezelle behandelt wurde.

Für die Lösungen NNM(1) und NNM(2) wurden in Summe 2,72 g einer Mischung aus NaHCO₃, Na₂SO₄ und MgSO₄ (jeweils C. Roth) in 1 L destilliertem Wasser gelöst. Auch in diesem Fall wurden durch unterschiedliche Parameter zwei verschiedene Elektrolysewasser hergestellt, NNM(1) mit einem pH-Wert von 8,7 und NNM(2) mit einem pH-Wert von 9,0.

Eine unbehandelte NNM-Lösung diente als Vergleichslösung.

Der Einfluss der Elektrolysewasser auf Myzelwachstum und Sporenkeimung wurde in Mikrotiterplattenversuchen erhoben. Hierfür wurden 200 µL Sporensuspension (10⁷ mL⁻¹ Sporen bei Botrytis, 10⁶ mL⁻¹ Sporen bei Fusarium) mit 1800 µL Elektrolysewasser, der NaCl-Lösung, oder einer Vergleichslösung (destilliertes Wasser) in Reagenzgläsern vermengt. Die Wirkung der Lösungen wurde durch Zugabe einer neutralisierenden PufferLösung (pH 7,2) oder durch die Zugabe von destilliertem Wasser gestoppt. Diese Platten wurden anschließend bei 24 °C inkubiert. Nach 24 h wurde eine eventuelle Sporenkeimung mittels 10 µL/Well Lactophenolblau gestoppt und die Anzahl der gekeimten Sporen mikroskopisch bestimmt. Jeder Versuch wurde dreimal wiederholt.

Für das Myzelwachstum wurden die Mikrotiterplatten wie oben beschrieben befüllt und die optische Dichte mit einem Mikroplatten-Reader (FluoStar Omega) bei 600 nm nach 0 h, 24 h, 48 h, 72 h und 96 h gemessen. Die statistische Auswertung erfolgte mittels ANOVA und Kruskal Wallis Test, mit Statgraphics 16 und SPSS. Die grafische Darstellung der Ergebnisse erfolgte mit Sigma Plot 12.

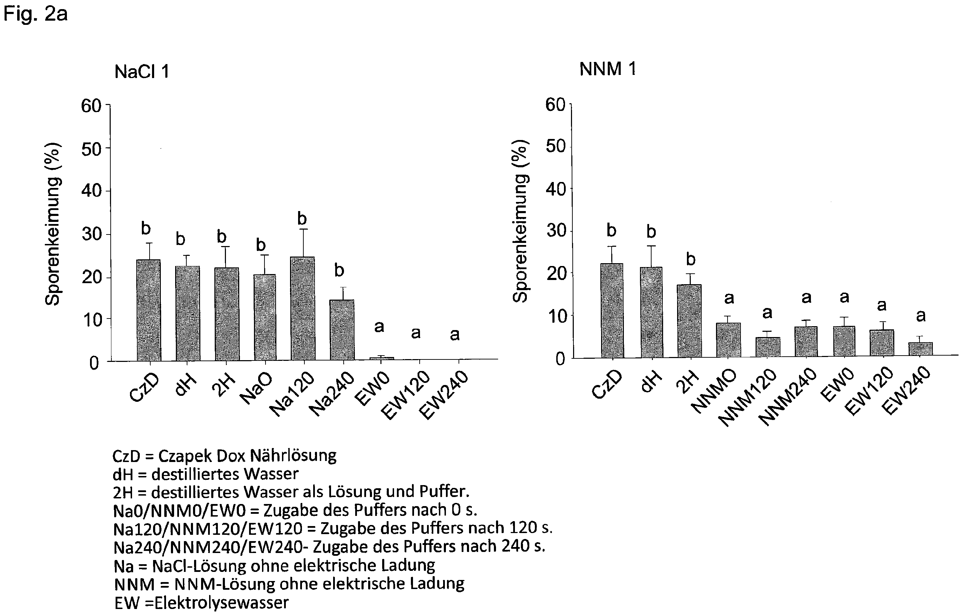

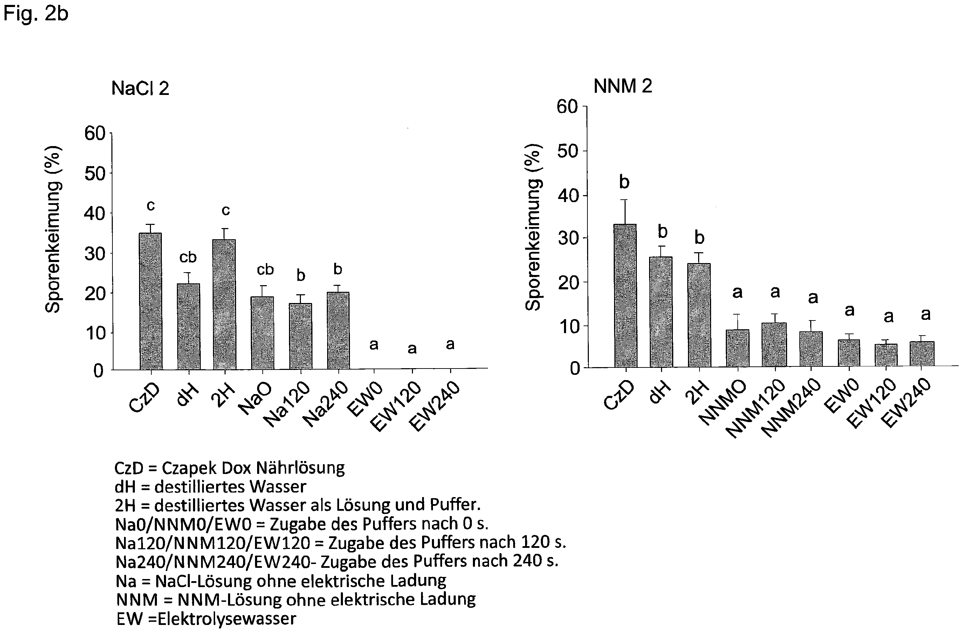

Botrytis cinerea zeigte, wie es Fig. 2a und 2b zu entnehmen ist, eine statistisch signifikante Reduktion der Sporenkeimung bei jenen Sporensuspensionen, die mit NaCl(1) und NaCl(2) behandelt wurden. Bei NNM(1) und NNM(2) konnten hingegen keine statistisch signifikanten Unterschiede zu den nicht mit in der Elektrolysezelle behandelten Elektrolyse-Lösungen festgestellt werden.

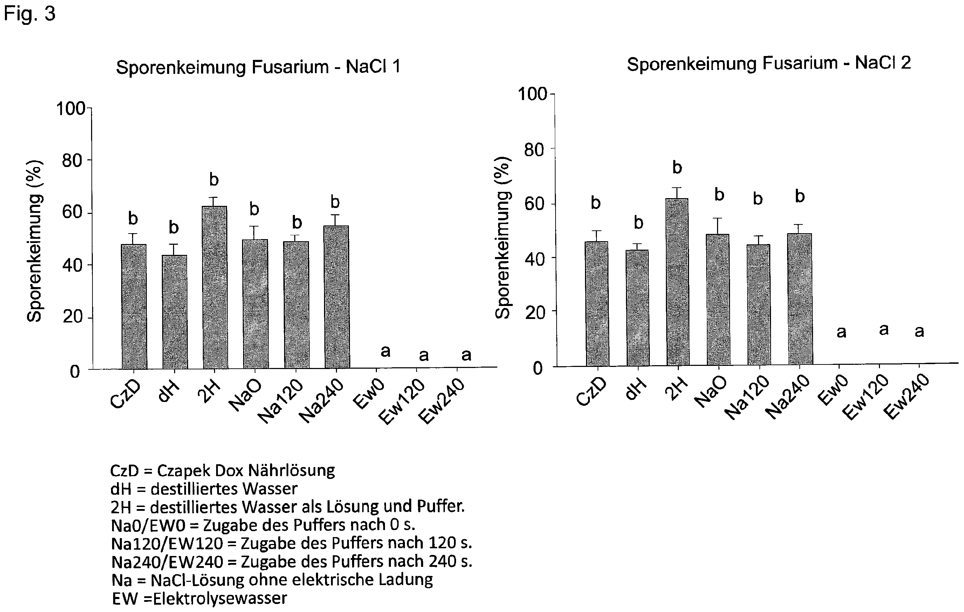

Die Sporenkeimtests mit Fusarium culmorum (Fig. 3) zeigen, dass die Behandlungen mit NaCl(1) und NaCl(2) ebenfalls zu einer statistisch signifikanten Reduktion der Sporenkeimung führten. In sämtlichen Behandlungen mit NNM(1) und NNM(2) Elektrolytlösung und Elektrolysewasser waren zum Auswertungstermin kaum Sporen in den Mikrotiterplatten auffindbar (Daten daher nicht dargestellt). Die Behandlung hat in diesem Fall möglicherweise zu einem Platzen der Sporen geführt.

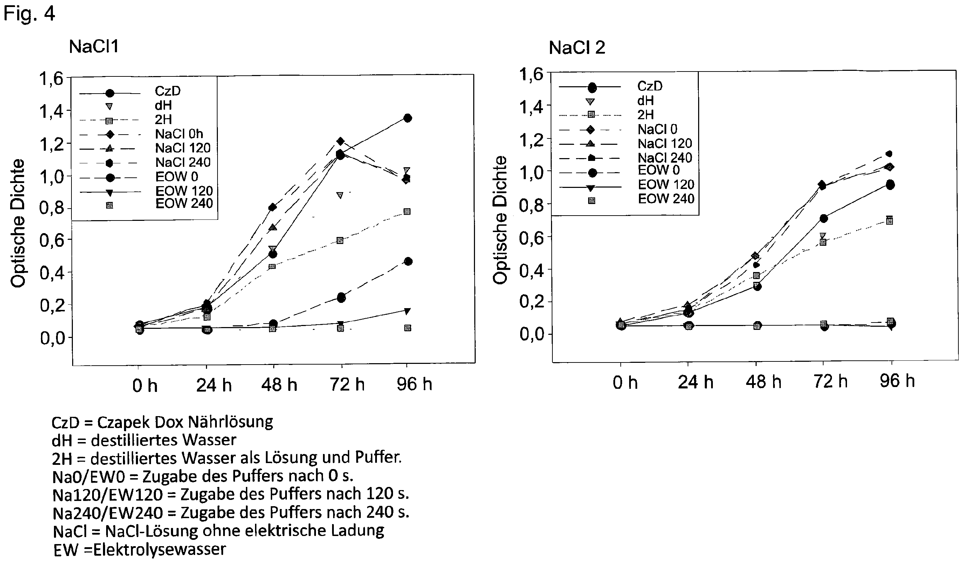

Die Elektrolysewasser auf NaCl-Basis führten ferner zu einer eindeutigen Hemmung der Myzelentwicklung bei Botrytis cinerea. NaCl(2) wirkte schon bei kürzerer Behandlungsdauer stärker als NaCl(1), wie es aus Fig. 4 ersichtlich ist. Das Myzelwachstum ist im zeitlichen Verlauf von 0 bis 96 h dargestellt. Für die statistische Auswertung des Myzelwachstums wurde der Wert der letzten Messung (96 h) herangezogen.

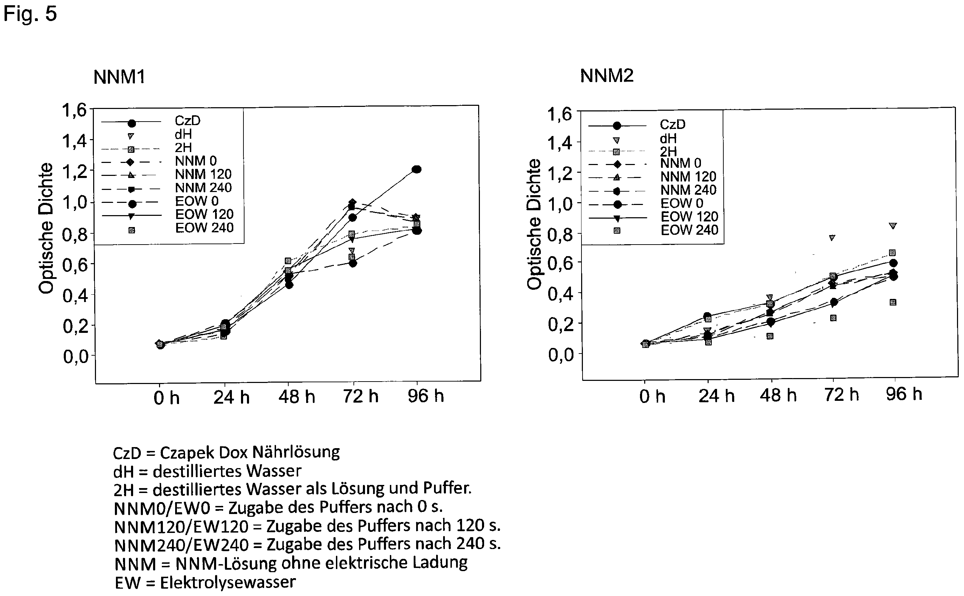

Bei NNM(2) konnte das Elektrolysewasser 240, mit einer Behandlungsdauer von 4 min einen statistisch signifikanten Unterschied zu den anderen Varianten erzielen (Fig. 5). Die anderen Behandlungen bei NNM(1) und NNM(2) zeigten keine statistisch signifikanten Unterschiede.

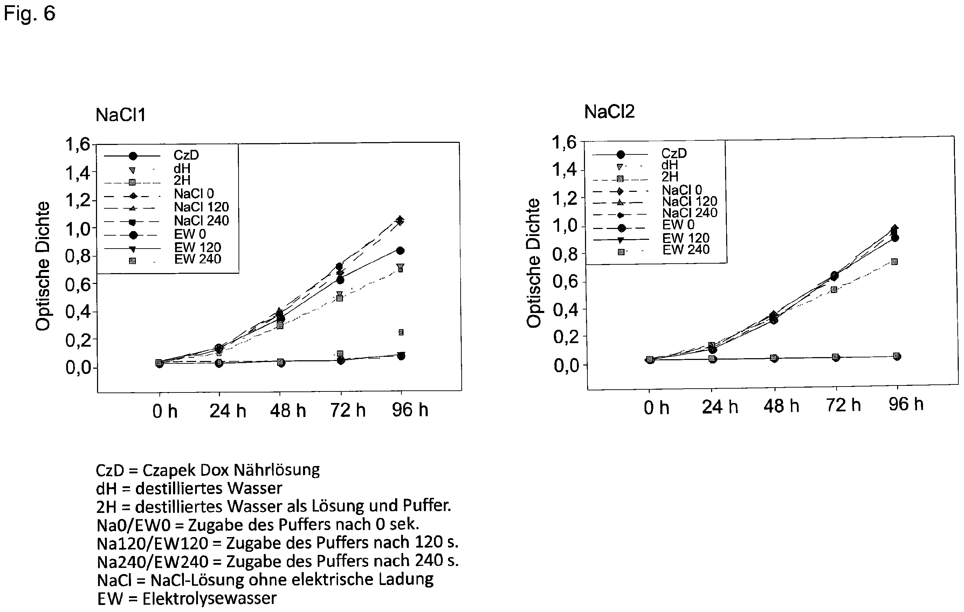

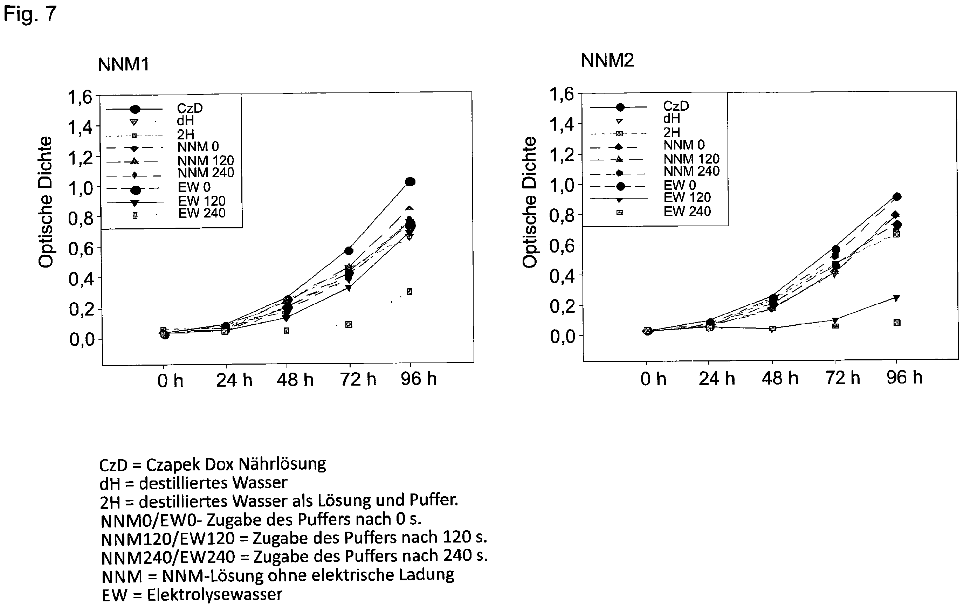

Fusarium culmorum war hinsichtlich der Wirksamkeit der verschiedenen Elektrolysewasser mit Botrytis cinerea vergleichbar. Während bei NaCl(1) und NaCl(2) klare und statistisch signifikant unterschiedliche Werte bestehen (Fig. 6), ist das bei NNM(1) und NNM(2) nicht in gleicher Form absicherbar. Im Gegensatz zu den Ergebnissen der Sporenkeimung können beim Myzelwachstum beide Elektrolysewässer NNM(1) und NNM(2), wenn sie mindestens 120 s lang mit NNM(2) oder 240 s mit NNM(1) behandelt wurden, signifikante Unterschiede zu den anderen Behandlungsarten aufweisen (siehe Fig. 7).

Die Versuche untermauern und lassen den Schluss zu, dass Elektrolysewasser, welches gemäß der Erfindung in einer zumindest eine Diamantelektrode aufweisenden Elektrolysezelle hergestellt ist und einen basischen pH aufweist, eine sehr gute Wirksamkeit auch gegenüber den anderen pflanzenpathogenen Pilzen der Gattungen Botrytis und Fusarium besitzt. Daraus ergeben sich zahlreiche potentielle Anwendungsmöglichkeiten für dieses Elektrolysewasser in der Landwirtschaft und im Gartenbau.

### Bezugsziffernliste

- 1: Elektrolysezelle
- 2: Kammer
- 3: Zuflussöffnung
- 4: Abflussöffnung
- 5: Kathode
- 6: Anode
- 7: Diamantpartikelelektrode

## Patentansprüche

1. Verwendung von Oxidationsmittel enthaltendem Elektrolysewasser mit neutralem bis basischem pH, welches in einer einkammrigen Elektrolysezelle (1), die zumindest eine Diamantelektrode (7) aufweist, aus einer wässrigen Salzlösung hergestellt ist, als Mittel zum Verhindern bzw. Behindern bzw. Reduzieren von Sporenkeimung und Myzelwachstum von Pilzen der Gattungen Botrytis oder Fusarium auf Pflanzen oder Früchten durch Aufbringen des Elektrolysewassers auf die Pflanzen oder Früchte.

2. Verwendung von Elektrolysewasser nach Anspruch 1 als Mittel zum Verhindern bzw. Behindern bzw. Reduzieren von Sporenkeimung und Myzelwachstum von Pilzen der Gattung Botrytis cinerea.

3. Verwendung von Elektrolysewasser nach Anspruch 1 oder 2 als Mittel zum Verhindern bzw. Behindern bzw. Reduzieren von Sporenkeimung und Myzelwachstum von Pilzen der Gattung Fusarium culmorum.

4. Verwendung von Elektrolysewasser nach einem der Ansprüche 1 bis 3 mit einem pH zwischen 7,1 und 11,5, insbesondere zwischen 7,1 und 9,5.

5. Verwendung von Elektrolysewasser nach einem der Ansprüche 1 bis 4 als Sprühmittel zum Sprühen auf Pflanzen, Pflanzenteile oder Früchte.

6. Verwendung von Elektrolysewasser nach einem der Ansprüche 1 bis 4 zum Waschen von Pflanzen, Pflanzenteilen oder von Früchten.

7. Verwendung von Elektrolysewasser nach einem der Ansprüche 1 bis 6 zur Behandlung der Pflanzen, Pflanzenteile oder Früchte im Anbaugebiet, der geernteten Pflanzen oder Früchte, ferner zur Behandlung der Pflanzen oder Früchte vor oder bei deren Transport, deren Lagerung oder im Verkaufslokal.

8. Verfahren zum Verhindern bzw. Behindern bzw. zur Reduktion von Sporenkeimung und Myzelwachstum von Pilzen der Gattungen Botrytis oder Fusarium auf Pflanzen oder Früchten,
**gekennzeichnet durch**,
Herstellen von Oxidationsmittel enthaltendem Elektrolysewasser mit einem neutralen bis basischen pH aus einer wässrigen Salzlösung in einer einkammrigen Elektrolysezelle (1), die als Elektrode zumindest eine Diamantelektrode (7) enthält, und Aufbringen des Elektrolysewassers auf die Pflanzen oder Früchte.

9. Verfahren nach Anspruch 8, **dadurch gekennzeichnet, dass** das Elektrolysewasser einen pH zwischen 7,1 und 11,5, insbesondere zwischen 7,1 und 9,5, aufweist.

10. Verfahren nach Anspruch 8 oder 9, **dadurch gekennzeichnet, dass** das Elektrolysewasser in einer Elektrolysezelle hergestellt wird, welche zumindest eine bipolare, insbesondere Bor-dotierte, Diamantpartikelelektrode (7) oder zumindest eine Diamantelektrode als Kontaktierungselektrode enthält.

11. Verfahren nach Anspruch 8, **dadurch gekennzeichnet, dass** die Salzlösung durch Zugabe von 2 g bis 8 g NaCl und/oder KCl und/oder MgCl₂ in 1 L Wasser hergestellt wird.

12. Verfahren nach einem der Ansprüche 8 bis 11, **dadurch gekennzeichnet, dass** das Elektrolysewasser zum Verhindern bzw. zur Reduktion der Sporenkeimung und des Myzelwachstums der Pilze Botrytis cinerea und Fusarium culmorum verwendet wird.

13. Verfahren nach einem der Ansprüche 8 bis 12, **dadurch gekennzeichnet, dass** das Elektrolysewasser auf die Pflanzen oder deren Teile oder auf die Früchte gesprüht wird oder dass die Pflanzen oder deren Teile oder Früchte mit dem Elektrolysewasser gewaschen werden.

14. Verfahren nach einem der Ansprüche 8 bis 13, **dadurch gekennzeichnet, dass** die Pflanzen, Teile der Pflanzen oder die Früchte in ihrem Anbaugebiet, im geernteten Zustand, ferner vor oder bei deren Transport, deren Lagerung oder im Verkaufslokal mit dem Elektrolysewasser behandelt werden.

## Claims

1. Use of oxidation agent containing electrolysis water with neutral to alkaline pH, which is produced in a single-chamber electrolysis cell (1) having at least one diamond electrode (7), from an aqueous saline solution, as a means for preventing or hindering or reducing spore germination and mycelium growth of fungi of the genres botrytis or fusarium on plants or fruit by applying the electrolysis water to said plants or fruit.

2. Use of electrolysis water according to claim 1 as a means of preventing or hindering or reducing spore germination and mycelium growth of fungi of the genre botrytis cinerea.

3. Use of electrolysis water according to claim 1 or 2 as a means of preventing or hindering or reducing spore germination and mycelium growth of fungi of the genre fusarium culmorum.

4. Use of electrolysis water according to one of the claims 1 to 3 with a pH of between 7.1 and 11.5, in particular between 7.1 and 9.5.

5. Use of electrolysis water according to one of the claims 1 to 4 as a spray fluid for spraying onto plants, plant components or fruit.

6. Use of electrolysis water according to one of the claims 1 to 4 for washing plants, plant components or fruit.

7. Use of electrolysis water according to one of the claims 1 to 6 for treating plants, plant components or fruit in the production area, the harvested plants or fruit, also for treating the plants or fruit prior to or during their transport, their storage or at a retail outlet.

8. Method for preventing, hindering or reducing spore germination and mycelium growth of fungi of the genres botrytis or fusarium on plants or fruit,
**characterised by**
production of oxidation agent containing electrolysis water with neutral to alkaline pH from an aqueous saline solution in a single-chamber electrolysis cell (1), containing at least one diamond electrode (7) as the electrode, and applying the electrolysis water to plants or fruit.

9. Method according to claim 8, **characterised in that** the electrolysis water has a pH of between 7.1 and 11.5, in particular between 7.1 and 9.5.

10. Method according to claim 8 or 9, **characterised in that** the electrolysis water is produced in an electrolysis cell, containing at least one bipolar, in particular boron-doped, diamond electrode (7) or at least one diamond electrode as a contacting electrode.

11. Method according to claim 8, **characterised in that** the saline solution is produced through addition of 2 g to 8 g NaCl and/or KCl and/or MgCl₂ to 1 L water.

12. Method according to one of the claims 8 to 11, **characterised in that** the electrolysis water is used for preventing or hindering or reducing the spore germination and the mycelium growth of botrytis cinerea and fusarium culmorum fungi.

13. Method according to one of the claims 8 to 12, **characterised in that** the electrolysis water is sprayed onto the plants or their components or onto the fruit, or that the plants or their components or fruit are washed with the electrolysis water.

14. Method according to one of the claims 8 to 13, **characterised in that** the plants, components of the plants or the fruit are treated with the electrolysis water in their production area, in the harvested condition, also prior to or during their transport, their storage or at a retail outlet

## Revendications

1. Utilisation d'eau d'électrolyse contenant un agent oxydant avec un pH neutre à basique, qui est préparé à partir d'une solution saline aqueuse dans une cellule d'électrolyse (1) à une chambre, qui présente au moins une électrode de diamant (7), comme moyen pour prévenir ou inhiber ou réduire la germination des spores et la croissance du mycélium des champignons de l'espèce Botrytis ou Fusarium sur des plantes ou des fruits par application de l'eau d'électrolyse sur les plantes ou les fruits.

2. Utilisation de l'eau d'électrolyse selon la revendication 1 comme agent pour prévenir ou inhiber ou réduire la germination des spores et la croissance du mycélium de champignons de l'espèce Botrytis cinerea.

3. Utilisation de l'eau d'électrolyse selon la revendication 1 ou 2 comme moyen pour prévenir ou inhiber ou réduire la germination des spores et la croissance du mycélium de champignons de l'espèce Fusarium culmorum.

4. Utilisation de l'eau d'électrolyse selon l'une des revendications 1 à 3 avec un pH entre 7,1 et 11,5, en particulier entre 7,1 et 9,5.

5. Utilisation de l'eau d'électrolyse selon l'une des revendications 1 à 4 comme agent de pulvérisation pour la pulvérisation sur des plantes, des parties de plantes ou des fruits.

6. Utilisation de l'eau d'électrolyse selon l'une des revendications 1 à 4 pour laver des plantes, des parties de plantes ou des fruits.

7. Utilisation de l'eau d'électrolyse selon l'une des revendications 1 à 6 pour le traitement de plantes, de parties de plantes ou de fruits dans la zone de culture, de plantes ou de fruits récoltés, également pour le traitement de plantes ou de fruits avant ou pendant leur transport, leur stockage ou dans le local de vente.

8. Procédé pour prévenir ou inhiber ou réduire la germination des spores et la croissance du mycélium de champignons des espèces Botrytis ou Fusarium sur des plantes ou des fruits, **caractérisé par**, la production d'eau d'électrolyse contenant un agent oxydant avec un pH neutre à basique à partir d'une solution saline dans une cellule d'électrolyse à une chambre (1), qui contient comme électrode au moins une électrode de diamant (7), et l'application de l'eau d'électrolyse sur les plantes ou les fruits.

9. Procédé selon la revendication 8, **caractérisé en ce que** l'eau d'électrolyse présente un pH entre 7,1 et 11,5, en particulier entre 7,1 et 9,5.

10. Procédé selon la revendication 8 ou 9, **caractérisé en ce que** l'eau d'électrolyse est produite dans une cellule d'électrolyse, qui contient au moins une électrode bipolaire à particule de diamant (7), en particulier dopée au bore, ou au moins une électrode de diamant comme électrode de contact.

11. Procédé selon la revendication 8, **caractérisé en ce que** la solution saline est produite par ajout de 2 g à 8 g de NaCl et/ou de KCl et/ou de MgCl₂ dans 1 litre d'eau.

12. Procédé selon l'une des revendications 8 à 11, **caractérisé en ce que** l'eau d'électrolyse est utilisée pour la prévention ou pour la réduction de la germination des spores et de la croissance des champignons Botrytis cinerea et Fusarium culmorum.

13. Procédé selon l'une des revendications 8 à 12, **caractérisé en ce que** l'eau d'électrolyse est pulvérisée sur les plantes ou sur les fruits, ou **en ce que** les plantes ou leurs parties ou les fruits sont lavés avec l'eau d'électrolyse.

14. Procédé selon l'une des revendications 8 à 13, **caractérisé en ce que** les plantes, les parties de plantes ou les fruits sont traités avec l'eau d'électrolyse dans leur zone de culture, à l'état récolté, également avant ou pendant leur transport, leur stockage ou dans le local de vente.
